# EUROPÄISCHE PATENTSCHRIFT

(11) **EP 4 667 289 B1**
(45) Veröffentlichungstag und Bekanntmachung des Hinweises auf die Patenterteilung: **11.11.2026**
(21) Anmeldenummer: 24183676.6
(22) Anmeldetag: 21.06.2024
(51) Int. Cl.: B60R 3/02, B60P 3/32

(54) **STÜTZVORRICHTUNG**
SUPPORTING DEVICE
DISPOSITIF DE SUPPORT

(43) Veröffentlichungstag der Anmeldung: 24.12.2025
(73) Patentinhaber: Sacher, Christian, 94327 Bogen (DE); Fritzmann, Wilfried, 92353 Postbauer-Heng (DE)
(72) Erfinder: Sacher, Christian, 94327 Bogen (DE); Fritzmann, Wilfried, 92353 Postbauer-Heng (DE)
(74) Vertreter: advotec.

(56) Entgegenhaltungen:
- EP-A1- 1 304 424
- CN-A- 106 671 859
- CN-B- 106 585 476
- JP-U- S54 146 021

## Beschreibung

Die vorliegende Erfindung betrifft eine Stützvorrichtung zum Abstützen einer Trittstufe eines Fahrzeugs, insbesondere eines Wohnmobils oder Wohnwagens.

Freizeitfahrzeuge, wie beispielsweise Wohnmobile und Wohnwagen weisen in der Regel ein- und ausklappbare Stufen oder Treppen auf. In der Regel handelt es sich hierbei um ein- und/oder zweistufige Treppen. Derartige Treppen weisen Stufengelenke zwischen den einzelnen Treppenstufen oder zwischen einer Trittstufe und einem Klappgestell am Fahrzeug auf, um ein reibungsloses Ein- und Ausklappen zu gewährleisten. Gerade diese Klappstufen bzw. Stufengelenke sind oftmals hohen Belastungen beim Benutzen derselben ausgesetzt. Besonders hohe Belastungen entstehen beim Benutzen der bekannten Treppen durch kräftig gebaute Personen oder Personen, welche Gegenstände, wie beispielsweise Gepäck in das oder aus dem Fahrzeug laden. Zudem ist bei den bekannten Treppen von Freizeitfahrzeugen oft ein unangenehmes Schaukeln bei der Benutzung zu beobachten, was die Trittsicherheit negativ beeinflusst.

Um die genannten Nachteile zumindest etwas zu überwinden, war es bislang üblich, Gegenstände, die gerade zur Hand sind, unter den Trittstufen zu positionieren. Eine zufriedenstellende, dauerhafte Lösung der geschilderten Probleme ist mit dieser Vorgehensweise natürlich nicht möglich. Einen Stand der Technik gemäss dem Oberbegriff des Anspruchs 1 ist in der Offenlegungsschrift CN 106 671 859 A offenbart.

Der vorliegenden Erfindung liegt die Aufgabe zu Grunde, die oben geschilderten Probleme aus dem Stand der Technik zu überwinden.

Diese Aufgabe wird erfindungsgemäß durch eine Stützvorrichtung mit den Merkmalen des Anspruchs 1 gelöst.

Mit Hilfe der beiden Abstützelemente der erfindungsgemäßen Stützvorrichtung lassen sich die Endbereiche einer Trittstufe optimal abstützen und stabilisieren, indem die Endbereiche der Trittstufe auf die jeweilige Stützplatte der Aufnahmeteile der Abstützelemente aufgelegt werden. Indem die Aufnahmeteile der beiden Abstützelemente mit den jeweiligen Fußteilen der beiden Abstützelemente höhenverstellbar gekoppelt sind, lässt sich die Stützvorrichtung an unterschiedliche Gegebenheiten, insbesondere unterschiedliche Geländehöhen, anpassen. Dabei ist es insbesondere vorteilhaft, wenn die beiden Abstützelemente unabhängig voneinander höhenverstellbar sind. Auf diese Art und Weise lassen sich Unebenheiten im Boden optimal ausgleichen. Dies gewährleistet eine stabile und feste Fixierung der abzustützenden Trittstufe. Durch die Auflage der Trittstufe auf den Stützplatten der Aufnahmeteile werden die Gelenke des Klappmechanismus der Trittstufe optimal entlastet. Dies wirkt einem schnellen Verschleiß der Gelenke entgegen und minimiert die Gefahr eines Bruches.

Bei der erfindungsgemäßen Stützvorrichtung sind die beiden Abstützelemente über eine Verbindungsstange miteinander verbindbar, wobei die Abstützelemente jeweils eine länglich ausgebildete Aufnahmehülse zur Aufnahme der beiden Endbereiche der Verbindungsstange aufweisen, wobei die Verbindungsstange vorzugsweise mittels Befestigungsmittel, insbesondere Befestigungsschrauben, an verschiedenen Stellen in der Aufnahmehülse befestigbar ist. Durch die Verbindung über eine solche, als Traverse ausgebildete Verbindungsstange wird die Trittstufe noch besser beidseitig stabilisiert. Durch die bevorzugte Ausführungsform, bei der die Abstützelemente jeweils eine länglich ausgebildete Aufnahmehülse zur Aufnahme der beiden Endbereiche der Verbindungsstange aufweisen, lassen sich unterschiedliche Abstände zwischen den beiden Abstützelementen einstellen, indem die Verbindungsstange soweit in die beiden Aufnahmehülsen eingeführt werden, bis der gewünschte Abstand hergestellt ist. Auf diese Art und Weise lässt sich die erfindungsgemäße Stützvorrichtung an unterschiedliche Stufenbreiten anpassen. Mit den oben genannten Befestigungsschrauben lässt sich die Verbindungsstange an den gewünschten Stellen in den Aufnahmehülsen fixieren, so dass eine optimale Stabilisierung einer Trittstufe möglich ist.

Bei einer bevorzugten Ausführungsform der erfindungsgemäßen Stützvorrichtung sind die oben genannten Aufnahmehülsen mit den Fußteilen verbunden, vorzugsweise verschweißt, wobei die Längsachsen der Fußteile mit den Längsachsen der Aufnahmehülsen einen rechten Winkel einschließen. Bei dieser Ausführungsform sind die jeweiligen Stützplatten der Aufnahmeteile mit den jeweiligen Aufnahmehülsen vorzugsweise verbunden, insbesondere verschweißt, wobei die Längsachsen der Stützplatten vorzugsweise quer zu den Längsachsen der Aufnahmehülsen angeordnet sind. Auf diese Art und Weise wird zum einen erreicht, dass die Endbereiche der abzustützenden Trittstufe optimal von den Aufnahmeteilen aufgenommen und abgestützt werden können. Zudem wird mit dieser Ausführungsform erreicht, dass eine Höhenverstellung der beiden Fußteile auch eine Höhenverstellung der Aufnahmehülsen und damit auch der Aufnahmeteile bewirkt.

Mit Vorteil sind die Aufnahmeteile als Profilschienen, insbesondere U-Profile ausgebildet, welche vorzugsweise an einer Stirnseite ein Abschlussblech aufweisen, wobei die jeweiligen freien Längskanten der U-Profile der beiden Abstützelemente im Einsatzzustand vorzugsweise aufeinander zugewandt angeordnet sind. Durch die Ausbildung als U-Profile, deren Höhe vorzugsweise an die Dicke der abzustützenden Trittstufe angepasst ist, lassen sich die Endbereiche einer abzustützenden Trittstufe perfekt umgreifen und so stabil halten. Durch die Ausbildung jeweils eines Abschlussbleches an einer Stirnseite der als Profilschienen ausgebildeten Aufnahmeteile lässt sich ein Anschlag erzielen, an den die vordere Stirnseite der abzustützenden Trittstufe anschlagen kann, so dass eine optimale Positionierung der Trittstufe gewährleistet ist. Indem die freien Längskanten der beiden als U-Profile ausgebildeten Aufnahmeteile einander zugewandt angeordnet sind, ist eine optimale Aufnahme der beiden Endbereiche einer Trittstufe möglich, indem die Stützvorrichtung von vorne auf die Trittstufe geschoben wird. Mit der beschriebenen Ausführungsform lässt sich die erfindungsgemäße Stützvorrichtung einfach und bequem an einer abzustützenden Stufe durch einfaches Aufschieben anbringen, ohne dass eine spezielle Montage, insbesondere eine Montage mit Werkzeug vonnöten wäre.

Die als U-Profile ausgebildeten Aufnahmeteile können mit der abzustützenden Trittstufe mittels Schrauben mit Betätigungsgriff optimal fixiert werden. Hierfür können insbesondere die Seitenplatten der U-Profile (siehe Bezugsziffer 7 in der Figurenbeschreibung) Aussparungen aufweisen, durch die solche Befestigungsschrauben soweit hindurchgeführt werden können, bis sie die Trittstufe kontaktieren. Eine solche Fixierung kann auch über eine Zugfeder erfolgen, welche einerseits mit der abzustützenden Stufe und andererseits beispielsweise mit einer Quertraverse verbunden ist.

Bei einer besonders bevorzugten Ausführungsform der erfindungsgemäßen Stützvorrichtung sind die beiden Fußteile der Abstützelemente stufenlos höhenverstellbar. Dadurch ist es wiederum möglich, die komplette Stützvorrichtung stufenlos in der Höhe zu verstellen, was ein optimales Anpassen der Stützvorrichtung an unebenes Gelände ermöglicht. Mit Vorteil weisen die beiden Fußteile jeweils eine Gewindespindel mit Außengewinde sowie ein entsprechendes Gegengewinde auf, wobei es sich bei den Gewinden vorzugsweise um Trapezgewinde handelt. Dadurch ist ein verschleißarmes, stufenloses Verstellen der Höhe möglich.

Eine Weiterbildung der vorstehend genannten Ausführungsform sieht vor, dass die Aufnahmeteile der beiden Abstützelemente derart mit den Fußteilen gekoppelt sind, dass eine Betätigung der Gewindespindeln eine Höhenverstellung der Aufnahmeteile bewirkt.

Bei einer bevorzugten Ausführungsform der erfindungsgemäßen Stützvorrichtung umfassen die Fußteile jeweils ein Fußrohr mit einem Innengewinde zur Aufnahme eines Außengewindes einer Gewindespindel, wobei die Fußrohre jeweils in einem Mantelrohr geführt sind, wobei die Mantelrohre vorzugsweise jeweils mit den jeweiligen Aufnahmehülsen verbunden sind, welche Aufnahmehülsen vorzugsweise die Aufnahmeteile tragen. Mit dieser Ausführungsform ist zum einen eine äußerst stabile Bauweise der Stützvorrichtung möglich. Des Weiteren lässt sich mit dieser Ausführungsform optimal eine Höhenverstellung der Aufnahmeteile und ein voneinander unabhängiges Ausgleichen von unebenem Gelände erreichen.

Mit Vorteil weisen die Fußteile an einem unteren Ende jeweils eine verschwenkbare Fußplatte auf. Mit einer verschwenkbaren Fußplatte lassen sich Unebenheiten im Gelände noch besser ausgleichen, was zu einem stabilen Stand der Stützvorrichtung und damit zu einer stabilen und sicheren Abstützung einer Trittstufe beiträgt.

In der Regel ist die erfindungsgemäße Stützvorrichtung im Wesentlichen aus Metall, insbesondere Edelstahl, eloxiertem Eisen, pulverbeschichtetem Eisen oder Aluminium gefertigt.

Bei einer alternativen Ausführungsform der erfindungsgemäßen Abstützvorrichtung sind die beiden Abstützelemente - anders als bei der oben beschriebenen Ausführungsform gemäß Anspruch 2, bei der die beiden Abstützelemente über eine Verbindungsstange verbunden sind, welche lösbar mit den Abstützelementen verbunden ist - über ein mit den Fußteilen der beiden Abstützelemente vorzugsweise unlösbar verbundenes langgestrecktes Verbindungselement, insbesondere eine Verbindungstraverse, verbunden. Der Vorteil zu der oben beschriebenen Ausführungsform besteht darin, dass die beiden Abstützelemente bei der Montage nicht erst mit der Verbindungsstange verbunden werden müssen. Vielmehr ist bei dieser Ausführungsform bereits eine Verbindung zwischen den beiden Abstützelementen gegeben. Nachteil gegenüber der oben beschriebenen Ausführungsform ist hier jedoch die nicht vorhandene Einstellbarkeit des Abstandes zwischen den beiden Abstützelementen.

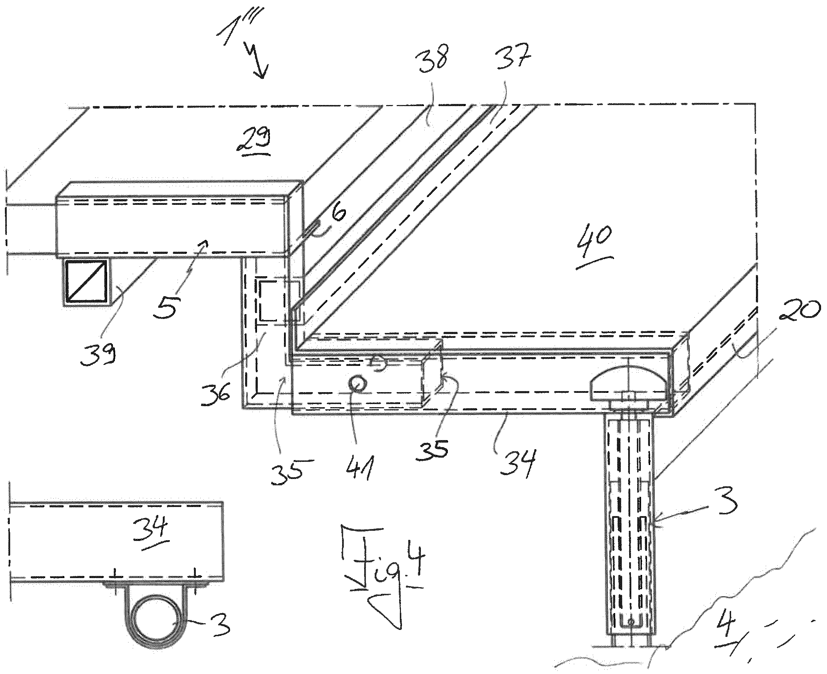

Bei einer Weiterbildung der erfindungsgemäßen Abstützvorrichtung sind die Aufnahmehülsen der beiden Abstützelemente jeweils mit einem quer zu ihren Längsachsen angeordneten, länglich ausgebildeten Kopplungselement, insbesondere mit einem Vierkantrohr verbunden, wobei die Vierkantrohre jeweils insbesondere über ein in das jeweilige Vierkantrohr eingeschobenes L-Stück direkt oder über eine Quertraverse mit einem Aufnahmeteil verbunden sind, wobei die beiden Kupplungselemente vorzugsweise mit einem Trittbrett, insbesondere Riffelblech, verbundenen sind. Wie in der Figur 4 gut zu erkennen ist, dient diese Ausführungsform insbesondere dazu, an die abzustützende Trittstufe eine weitere Stufe zu koppeln, um den Abstand zwischen dem Erdboden und der untersten Trittstufe zu verringern. Dadurch werden der Ein- und Ausstieg aus einem Wohnmobil komfortabler.

Die vorstehend beschriebene Ausführungsform kann auch mit einem Verbindungselement verwirklicht sein, wie es im Anspruch 11 beschrieben ist. Bei einer solchen Ausführungsform ist das Kopplungselement nicht mit einer Aufnahmehülse, sondern mit einem, insbesondere unlösbar mit den Fußteilen verbundenen Verbindungselement verbunden.

Die vorliegende Erfindung betrifft ferner einen Kit, umfassend eine an einem Fahrzeug gelagerte, ein- und ausklappbare Trittstufe, sowie eine Stützvorrichtung nach einem der Ansprüche 1 bis 10.

Weitere Merkmale der Erfindung ergeben sich aus der nachfolgenden Beschreibung von bevorzugten Ausführungsbeispielen der Erfindung in Verbindung mit den Zeichnungen und den Unteransprüchen. Hierbei können die einzelnen Merkmale für sich allein oder in Kombination miteinander verwirklicht sein.

In den Zeichnungen zeigen:
- Figur 1A:: eine Frontansicht auf eine erste Ausführungsform einer erfindungsgemäßen Stützvorrichtung;
- Figur 1B:: eine Draufsicht auf die Stützvorrichtung von Figur 1A mit Querschnitt durch ein Fußteil;
- Figur 2A:: eine Frontansicht auf eine zweite Ausführungsform einer erfindungsgemäßen Stützvorrichtung;
- Figur 2B:: eine Draufsicht auf die Stützvorrichtung von Figur 2A;
- Figur 3A:: eine Seitenansicht einer weiteren Ausführungsform einer erfindungsgemäßen Stützvorrichtung;
- Figur 3B:: eine Frontansicht auf die Ausführungsform von Figur 3A;
- Figur 3C:: eine Draufsicht auf die Stützvorrichtung von Figur 3A;
- Figur 3D:: eine perspektivische Darstellung der Stützvorrichtung von Figur 3A mit Trittstufe;
- Figur 4:: eine perspektivische Darstellung einer weiteren Ausführungsform einer erfindungsgemäßen Stützvorrichtung mit Zusatzstufe.

Nachfolgend werde gleiche oder funktionsgleiche Elemente mit den gleichen Bezugszeichen gekennzeichnet.

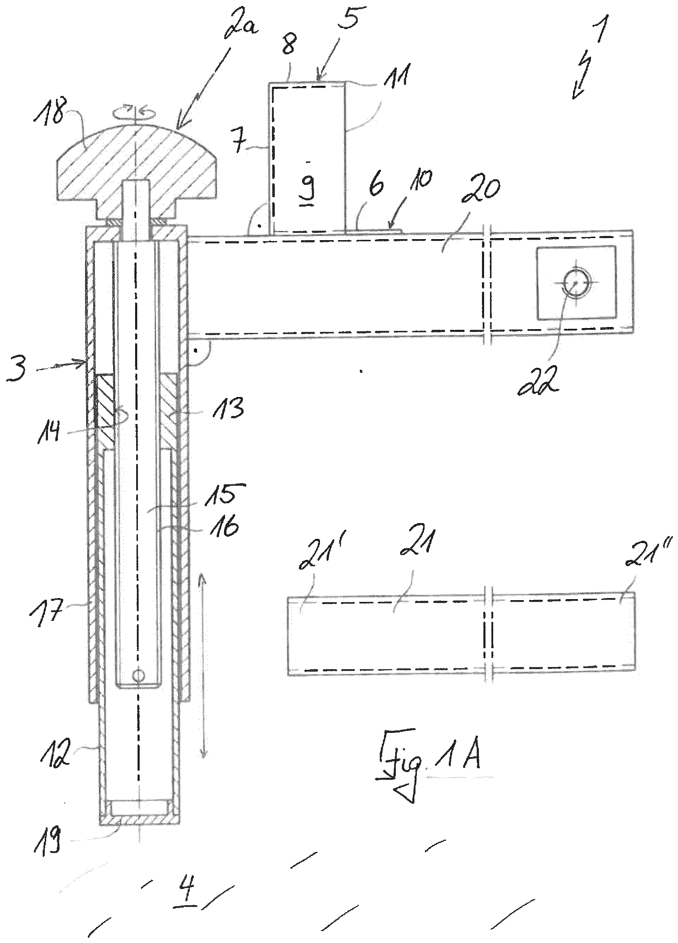

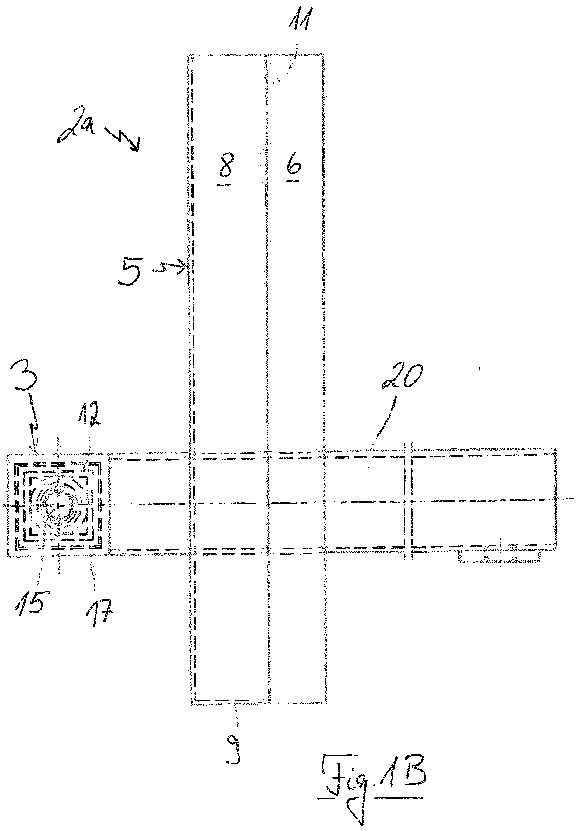

Figur 1A zeigt eine Frontansicht auf eine erfindungsgemäße Stützvorrichtung 1 im Einsatzzustand, wobei in den Figuren 1A und 1B noch keine abzustützende Trittstufe eingezeichnet ist. Die Stützvorrichtung 1 umfasst ein erstes Abstützelement 2a zum Abstützen eines ersten seitlichen Endbereichs der Trittstufe sowie ein (hier nicht dargestelltes, identisch aufgebautes) zweites Abstützelement, welches rechts vom Abstützelement 2a am anderen Ende der Stützvorrichtung angeordnet ist. Ebenso wie das zweite Abstützelement weist das erste Abstützelement ein Fußteil 3 zum Aufstellen des Abstützelements 2a auf einem Untergrund 4 auf. Des Weiteren umfasst das erste Abstützelement 2a (ebenso wie das zweite Abstützelement) ein Aufnahmeteil 5 zur Aufnahme eines seitlichen Endbereichs der Trittstufe.

Die Aufnahmeteile 5 der Abstützelemente umfassen jeweils eine Stützplatte 6 zum Auflegen der Endbereiche der Trittstufe.

Wie auch das Aufnahmeteil des zweiten Abstützelements ist auch das Aufnahmeteil 5 des ersten Abstützelements 2a als Profilschiene in der Form eines U-Profils ausgebildet. Neben der Stützplatte 6 umfasst dieses als U-Profil ausgebildete Aufnahmeteil 5 eine senkrecht zur Stützplatte angeordnete Seitenplatte 7 sowie eine mit der Seitenplatte 7 einen rechten Winkel einschließende obere Deckplatte 8. An der vorderen Stirnseite des Aufnahmeteils 5 ist eine einen Anschlag bildende Abschlussplatte 9 angeordnet. Die Stützplatte 6 ist breiter ausgebildet als die Deckplatte 8, so dass eine große Auflagefläche 10 für die abzustützende Trittstufe vorliegt. Das Aufnahmeteil 5 des ersten Abstützelements 2a ist derart angeordnet, dass die freien Längskanten 11 nach rechts in Richtung des Aufnahmeteils des zweiten Abstützelements weisen, wobei die (hier nicht dargestellten) freien Enden des Aufnahmeteils 5 des zweiten Abstützelements, welches ebenfalls als U-Profil ausgebildet ist, nach links in Richtung des Aufnahmeteils 5 des ersten Abstützelements 2a weisen.

Ebenso wie das zweite Abstützelement weist auch das Fußteil 3 des Abstützelements 2 der Stützvorrichtung 1 ein Fußrohr 12 mit viereckigem Querschnitt auf, welches an einem oberen Ende eine verengte Zone 13 mit einem Innengewinde 14 aufweist. Das Fußteil 3 umfasst ferner eine Gewindespindel 15 mit einem Außengewindet 16. Bei den beiden Gewinden 14 und 16 handelt es sich jeweils um ein Trapezgewinde. Das Fußrohr 12 wird in einem Mantelrohr 17, welches ebenfalls einen viereckigen Querschnitt aufweist, geführt. Am oberen Ende der Gewindespindel 15 ist ein Betätigungselement in Form eines Sterngriffs 18 angeordnet. Am unteren Ende der Gewindespindel 15 ist eine Endkappe 19 aus PVC angeordnet. Durch Drehen am Sterngriff 18 und damit durch Drehen der Gewindespindel 15 lässt sich - abhängig von der Drehrichtung - das Fußrohr 12 aus dem Mantelrohr 17 heraus- oder hineinfahren und so eine stufenlose Höhenverstellung bewerkstelligen (s. Pfeile in Figur 1A).

An das Mantelrohr 17 des Fußteils 3 ist eine Aufnahmehülse 20 angeschweißt und schließt mit dem Mantelrohr 17 einen rechten Winkel ein. Die Aufnahmehülse 20 dient zur Aufnahme eines ersten Endbereichs 21' einer Verbindungstraverse 21, die in der Figur 1 noch außerhalb der Aufnahmehülse dargestellt ist. Ein zweiter Endbereich 21" der Verbindungstraverse 21 wird in die Aufnahmehülse des zweiten (hier nicht dargestellten) Abstützelements eingeführt. Durch die Wahl, wie weit die Verbindungstraverse 21 in die beiden Aufnahmehülsen eingeführt wird, kann der Abstand zwischen dem ersten Abstützelement 2a und dem zweiten Abstützelement optimal eingestellt werden. Ist der ideale Abstand erreicht, um eine Trittstufe optimal von den Aufnahmeteilen aufzunehmen, wird die Verbindungstraverse 21 mittels Befestigungsschrauben 22 in den Aufnahmehülsen 20 fixiert.

Die Stützplatte 6 des Aufnahmeteils 5 ist, wie dies auch beim zweiten Abstützelement der Fall ist, mit der Aufnahmehülse 20 verschweißt, wobei die Längsachse der Stützplatte 6 quer zu der Längsachse der Aufnahmehülse 20 angeordnet ist.

Die spezielle Anordnung des Aufnahmeteils 5 an der Aufnahmehülse 20 und die oben beschriebene Verbindung der Aufnahmehülse 20 mit dem Mantelrohr 17 ermöglicht es, dass durch eine (oben beschriebene) Höhenverstellung durch die Gewindespindel 15 auch eine stufenlöse Höhenverstellung des Aufnahmeteils 5 erfolgt. Wird beispielsweise das Fußrohr 12 durch Drehen der Gewindespindel 15 ein Stück weit aus dem Aufnahmerohr 17 hinausgedreht, erfolgt automatisch eine Bewegung des Mantelrohrs 17 und damit auch der Aufnahmehülse 20 mit dem Aufnahmeteil 5 nach oben. Ein Drehen der Gewindespindel in die entgegengesetzte Richtung bewirkt das Gegenteil, also das Absenken der Aufnahmehülse 20 und damit auch des Aufnahmeteils 5. Auf diese Art und Weise lässt sich die Stützvorrichtung 1 optimal an unterschiedliche Gegebenheiten im Gelände anpassen. Aufgrund der Tatsache, dass die beiden Abstützelemente unabhängig voneinander höhenverstellbar sind, lassen sich auch Höhenunterschiede zwischen den beiden Abstützelementen ausgleichen.

In der Figur 1B ist die Stützvorrichtung 1 in einer Draufsicht gezeigt. Hier wird insbesondere die Anordnung des Aufnahmeteils 5 auf der Aufnahmehülse 20 verdeutlicht. Zudem ist hier der Aufbau des Fußteils 3 im Querschnitt zu sehen.

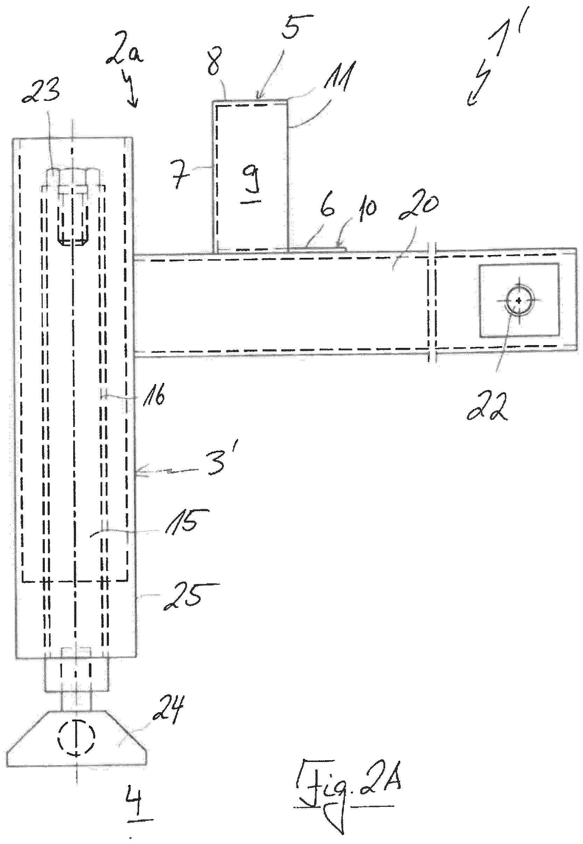

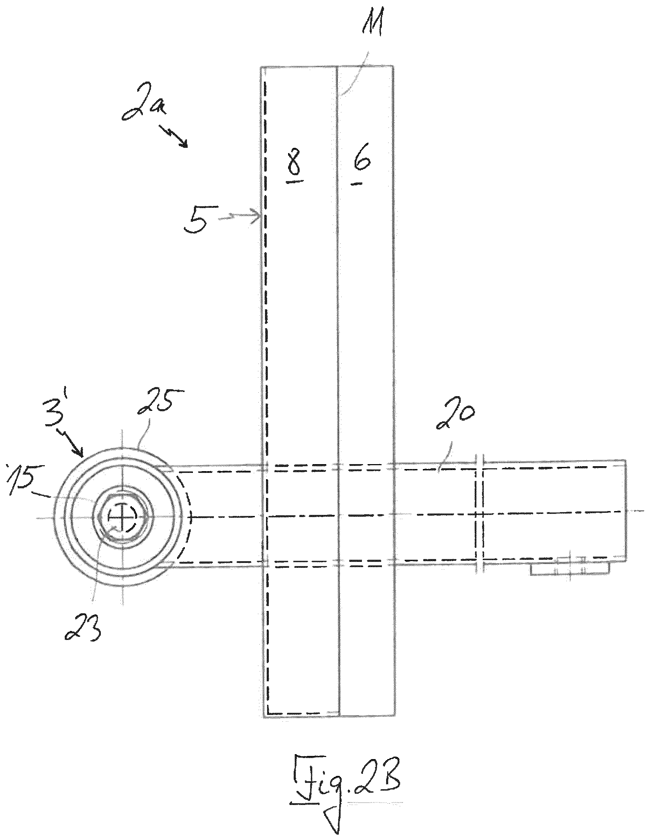

Die Figuren 2A und 2B zeigen eine weitere Ausführungsform einer erfindungsgemäßen Stützvorrichtung 1'. Die Stützvorrichtung 1' unterscheidet sich von der Stützvorrichtung 1 gemäß den Figuren 1A und 1B lediglich durch das Fußteil 3'. Das Fußteil 3' umfasst ebenfalls eine Gewindespindel 15, welche an ihrem oberen Ende einen Sechskant 23 trägt. Die Gewindespindel 15 weist an ihrem unteren Ende einen schwenkbaren Fußteller 24 auf. Die Gewindespindel 15 ist in einem Aufnahmerohr 25 mit Innengewinde aufgenommen. Auch hier ist das Außengewinde der Gewindespindel 15 und das Innengewinde des Aufnahmerohrs 25 als Trapezgewinde ausgebildet. Durch Drehen des Sechskants 23 lässt sich die Gewindespindel 15 aus dem Aufnahmerohr 25 hinaus- bzw. hineindrehen. Auf diese Art und Weise wird auch bei dieser Ausführungsform eine stufenlose Höhenverstellbarkeit erreicht.

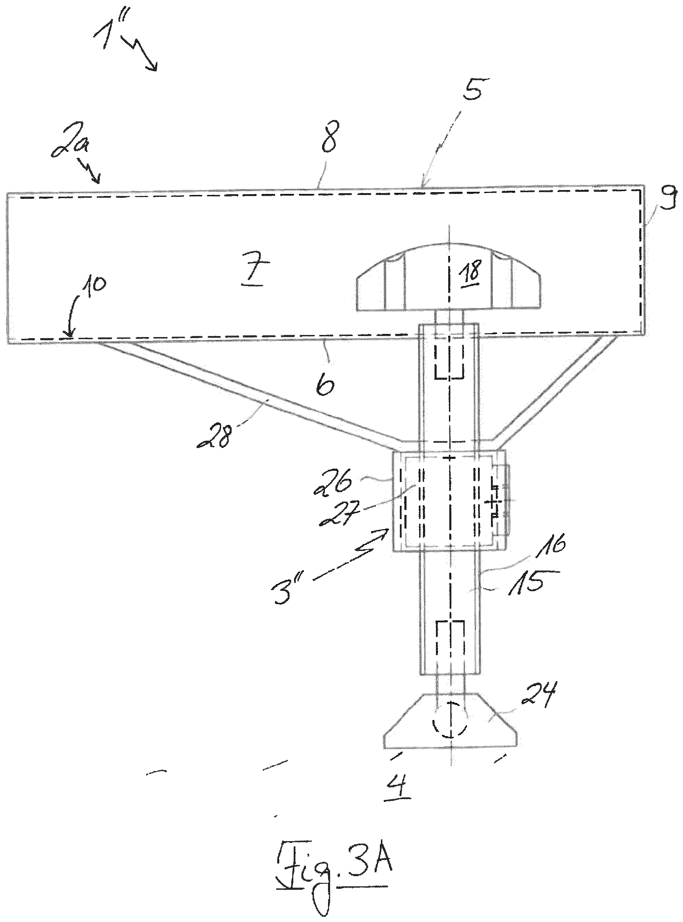

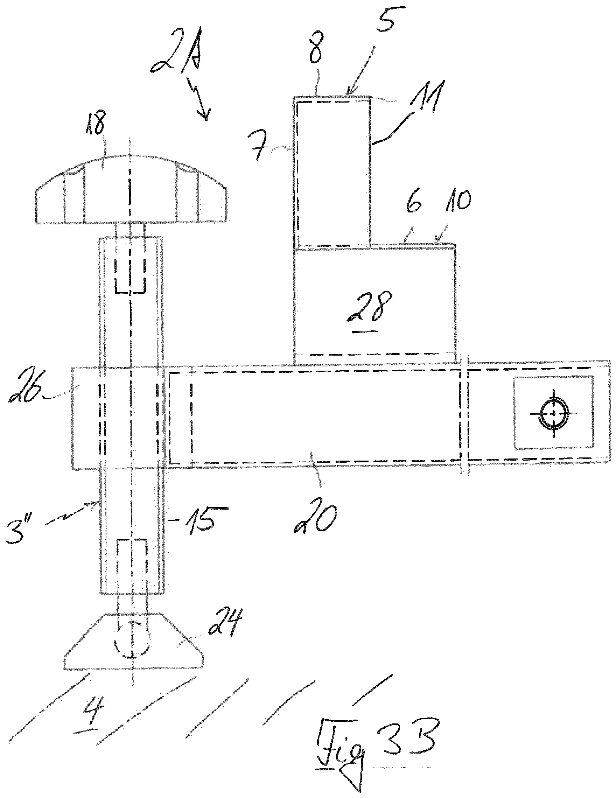

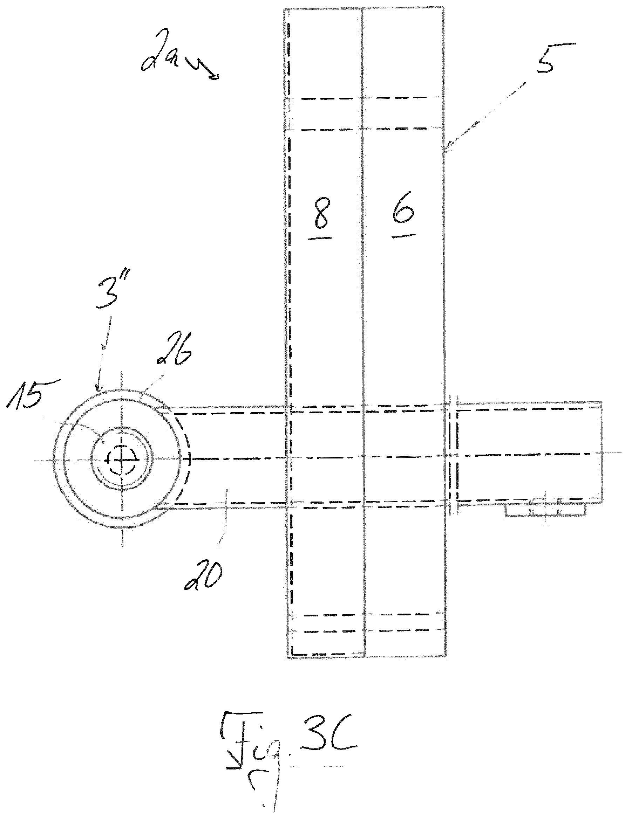

Die in den Figuren 3A bis 3D dargestellte Ausführungsform einer erfindungsgemäßen Stützvorrichtung 1" unterscheidet sich von der Ausführungsform 1 der Figuren 1A und 1B durch die Ausbildung des Fußteils 3" und die Lagerung des Aufnahmeteils 5 auf der Aufnahmehülse 20.

Das Fußteil 3" umfasst eine Gewindespindel 15 mit Trapezgewinde, welche an ihrem oberen Ende einen Sterngriff 18 aufweist. Die Gewindespindel 15 durchgreift einen Aufnahmezylinder 26 mit entsprechend ausgebildetem Innengewinde 27. Am unteren Ende der Gewindespindel 15 ist wie bei der Ausführungsform gemäß Figur 2A und 2B ein Fußteller 24 aus Kunststoff angeordnet. Dieser Fußteller dient unter anderem auch dazu, Vertiefungen und Erhöhungen in Grasböden oder geschotterten Böden auszugleichen.

Der Aufnahmezylinder 26 ist über seinen Außenumfang mit der Aufnahmehülse 20 verschweißt.

Die Aufnahmeteile 5 der Stützvorrichtung 1" sind analog den Aufnahmeteilen 5 der Stützvorrichtungen 1 und 1' ausgebildet. Anders als bei den Stützvorrichtungen 1 und 1' ist das Aufnahmeteil 5 der Stützvorrichtung 1" nicht direkt mit der Aufnahmehülse 20 verschweißt, sondern ist über ein gekröpftes Distanzstück 28 mit der Aufnahmehülse 20 verbunden. Das Distanzstück 28 ist einerseits mit der Aufnahmehülse 20 und andererseits mit der Stützplatte 6 des Aufnahmeteils 5 verschweißt.

Ein Drehen am Sterngriff 18 der Gewindespindel 15 bewirkt - abhängig von der Drehrichtung - ein Absenken oder Heben der Aufnahmehülse 20 und damit des Aufnahmeteils 5.

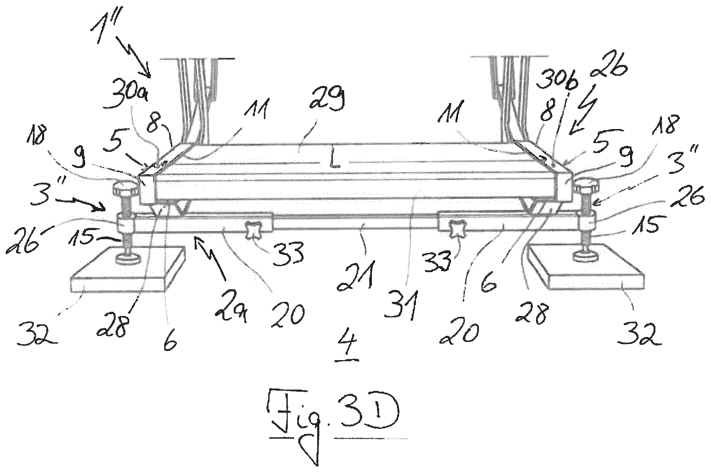

Die Figur 3D zeigt eine perspektivische Darstellung der Stützvorrichtung 1" im Einsatzzustand mit einer durch die Stützvorrichtung 1" abgestützten Trittstufe 29. Wie aus der Figur 3D gut zu entnehmen ist, umfasst die Stützvorrichtung 1" (ebenso wie die Stützvorrichtungen 1 und 1') zwei identisch ausgebildete Abstützelemente 2a und 2b. Die Abstützelemente 2a und 2b sind im Einsatzzustand lediglich über die Verbindungstraverse 21 miteinander verbunden. Somit zeigt die Figur 3D auch einen erfindungsgemäßen Kit, umfassend die Stützvorrichtung 1" sowie die Trittstufe 29. Anhand der Figur 3D lässt sich gut illustrieren, wie die Stützvorrichtung 1" im Idealfall mit der Trittstufe 29 gekoppelt wird, um eine optimale Stützfunktion zu erreichen.

Zunächst wird die Länge L der Trittstufe 29 ermittelt. Dann wird die Verbindungstraverse 21 an ihren beiden Endbereichen soweit in die Aufnahmehülsen 20 der Abstützelemente 2a und 2b eingeführt, bis die Aufnahmeteile 5 der beiden Abstützelemente 2a und 2b so weit voneinander entfernt sind, dass die Endabschnitte 30a und 30b der Trittstufe 29 optimal von den Aufnahmeteilen 5 der Abstützelemente 2a und 2b aufgenommen werden können. Dann werden die Aufnahmeteile 5 von der vorderen Stirnseite 31 der Trittstufe 29 aus auf die Trittstufe 29 geschoben, bis die vordere Stirnseite 31 die Abschlussplatten 9 kontaktiert. Durch Betätigung der Sterngriffe 18 der Fußteile 3" der Abstützelemente 2a und 2b lässt sich eine Feineinstellung vornehmen, bei der die Stützvorrichtung 1" optimal an einen unebenen Untergrund 4 angepasst werden kann. Diese Feineinstellung lässt sich seitenunabhängig durchführen. Dadurch lässt sich auch die Trittstufe 29 problemlos ausrichten. Bei Bedarf können auch noch Unterlegplatten 32 unter die Fußteile 3" gelegt werden. Durch Betätigen der Griffe 33, welche mit Schrauben verbunden sind, lässt sich die Verbindungstraverse 21 in den Aufnahmehülsen 20 fixieren.

Zur Überführung des in der Figur 3D dargestellten Gebrauchszustands in einen Nicht-Gebrauchszustand wird die Stützvorrichtung 1" zunächst wieder von der Trittstufe 29 entfernt, indem die Stützvorrichtung 1" von der Trittstufe 29 gezogen wird. Anschließend werden die mit den Griffen 33 verbundenen Schrauben gelockert, so dass die Aufnahmehülsen 20 von der Verbindungstraverse 21 gezogen werden können. Anschließend lassen sich die beiden Abstützelemente 2a und 2b sowie die Verbindungstraverse 21 platzsparend verstauen.

Figur 4 zeigt eine perspektivische Darstellung einer weiteren Ausführungsform einer erfindungsgemäßen Stützvorrichtung 1‴. Im Vergleich zu den Stützvorrichtung 1, 1' und 1" ist bei dieser Ausführungsform eine deutliche Beabstandung zwischen dem Fußteil 3 und dem Aufnahmeteil 5 der Abstützelemente 2a und 2b vorgesehen. Bei der Ausführungsform 1‴ sind die Aufnahmehülsen 20 jeweils mit einem Vierkantrohr 34 verschweißt. Die Vierkantrohre 34 sind quer zu den Längsachsen der Aufnahmehülsen 20 angeordnet. In die Vierkantrohre 20, von denen in der Figur 4 nur eines zu sehen ist, ist jeweils ein L-Stück 35 eingeschoben, dessen abgewinkeltes Ende 36 aus dem Vierkantrohr 34 ragt. Das abgewinkelte Ende 36 des L-Stücks 35 ist mit einer Zwischentraverse 37 verschweißt. Die Zwischentraverse 37 ist wiederum mit einer Verbindungstraverse 38 verbunden, insbesondere verschweißt, wobei die Verbindungstraverse 38 und die Zwischentraverse 37 die beiden Aufnahmeteile 5 der Abstützelemente 2a und 2b miteinander verbinden. Die Verbindungstraverse 38 ist mit den Stützplatten 6 der Aufnahmeteile 5 verschweißt. Es ist auch denkbar, dass die Verbindungstraverse 38 ohne Zwischenschaltung der Zwischentraverse 37 direkt mit dem abgewinkelten Ende 36 des L-Stücks 35 verbunden, insbesondere verschweißt ist. Zudem ist es auch denkbar, dass das Vierkantrohr 34 selbst L-förmig ausgebildet ist und das abgewinkelte Ende eines solchen Vierkantrohrs direkt mit der Stützplatte 6 eines Aufnahmeteils 5 verbunden, insbesondere verschweißt ist. Aus Stabilisierungsgründen kann zwischen den beiden Aufnahmeteilen 5 der beiden Abstützelemente 2a und 2b eine weitere Stabilisierungstraverse 39 vorgesehen sein, welche mit den Stützplatten 6 der Aufnahmeteile 5 verbunden ist.

Auf den Vierkantrohren 34 ruht ein Riffelblech 40, welches an seinen beiden Längsseiten in entgegengesetzte Richtungen abgekantet ist. Das Riffelblech 40 ist mit den Oberseiten der Vierkantrohre 34 vernietet und dient als weitere Trittstufe, um den Abstand zwischen der ersten Trittstufe, die nun durch das Riffelblech 40 gebildet wird, und dem Untergrund 4 zu verringern. Im Vierkantrohr 34 sowie im L-Stück 35 sind zueinander fluchtende Bohrungen 41 zur Aufnahme eines Sicherungsbolzens vorgesehen.

Das Riffelblech 40 kann mit den Vierkantrohren auch lösbar verbunden sein. So ist es denkbar, dass das Riffelblech mittels Schrauben oder Bolzen mit den Vierkantrohren verbunden ist.

Das Fußteil 3 kann, wie auch die oben beschriebenen Fußteile 3' und 3" klappbar ausgebildet sein. Wie in der Figur 4 unten dargestellt, kann das Fußteil um 90° eingeklappt werden, um die Stützvorrichtung im demontierten Zustand besser lagern zu können.

## Patentansprüche

1. Stützvorrichtung (1, 1', 1", 1‴) zum Abstützen einer Trittstufe (29) eines Wohnmobils oder Wohnwagens, umfassend ein erstes Abstützelement (2a) zum Abstützen eines ersten seitlichen Endabschnitts (30a) der Trittstufe (29), sowie ein zweites Abstützelement (2b) zum Abstützen eines zweiten seitlichen Endabschnitts (30b) der Trittstufe (29), wobei jedes der beiden Abstützelement (2a, 2b) ein Fußteil (3, 3', 3") zum Aufstellen des Abstützelements (2a, 2b) auf einem Untergrund (4) und ein Aufnahmeteil (5) zur Aufnahme des jeweiligen seitlichen Endbereichs (30a, 30b) der Trittstufe (29) aufweist, wobei die Aufnahmeteile (5) zumindest jeweils eine Stützplatte (6) zum Auflegen der Endbereiche (30a, 30b) der Trittstufe (29) aufweisen und wobei die Aufnahmeteile (5) der beiden Abstützelemente (2a, 2b) mit den jeweiligen Fußteilen (3, 3', 3") der beiden Abstützelemente (2a, 2b) höhenverstellbar gekoppelt sind, wobei die beiden Abstützelemente (2a, 2b) über eine Verbindungsstange (21) miteinander verbindbar sind, **dadurch gekennzeichnet, dass** die Abstützelemente (2a, 2b) jeweils eine länglich ausgebildete Aufnahmehülse (20) zur Aufnahme der beiden Endbereiche der Verbindungsstange (21) aufweisen, wobei die Verbindungsstange (21) mittels Befestigungsmittel an verschiedenen Stellen in der Aufnahmehülse (20) befestigbar ist.

2. Stützvorrichtung nach Anspruch 1, **dadurch gekennzeichnet, dass** die Befestigungsmittel Befestigungsschrauben sind..

3. Stützvorrichtung nach Anspruch 2, **dadurch gekennzeichnet, dass** die Aufnahmehülsen (20) mit den jeweiligen Fußteilen (3, 3', 3") verbunden, vorzugsweise verschweißt sind, wobei die Längsachsen der Fußteile (3, 3', 3") mit den Längsachsen der Aufnahmehülsen (20) jeweils einen rechten Winkel einschließen.

4. Stützvorrichtung nach einem der Ansprüche 2 oder 3, **dadurch gekennzeichnet, dass** die Stützplatten (6) der Aufnahmeteile (5) mit den jeweiligen Aufnahmehülsen (20) verbunden, insbesondere verschweißt sind, wobei die Längsachsen der Stützplatten (6) vorzugsweise quer zu den Längsachsen der Aufnahmehülsen (20) angeordnet sind.

5. Stützvorrichtung nach einem der vorhergehenden Ansprüche, **dadurch gekennzeichnet, dass** die Aufnahmeteile (5) als Profilschienen, insbesondere U-Profile, ausgebildet sind, welche vorzugsweise an einer Stirnseite ein Abschlussblech (9) aufweisen, wobei die jeweiligen freien Längskanten (11) der U-Profile der beiden Abstützelemente (2a, 2b) im Einsatzzustand vorzugsweise einander zugewandt angeordnet sind.

6. Stützvorrichtung nach einem der vorhergehenden Ansprüche, **dadurch gekennzeichnet, dass** die beiden Fußteile (3, 3', 3") der beiden Abstützelemente (2a, 2b) stufenlos höhenverstellbar sind und vorzugsweise jeweils eine Gewindespindel (15) mit Außengewinde (16) sowie ein entsprechendes Gegengewinde (14, 27) aufweisen, wobei es sich bei den Gewinden (16, 14, 27) vorzugsweise um Trapezgewinde handelt.

7. Stützvorrichtung nach Anspruch 6, **dadurch gekennzeichnet, dass** die Aufnahmeteile (5) der beiden Abstützelemente (2a, 2b) derart mit den Fußteilen (3, 3', 3") gekoppelt sind, dass eine Betätigung der Gewindespindeln (15) eine Höhenverstellung der Aufnahmeteile (5) bewirkt.

8. Stützvorrichtung nach einem der vorhergehenden Ansprüche, insbesondere nach Anspruch 2, **dadurch gekennzeichnet, dass** die Fußteile (3) jeweils ein Fußrohr (12) mit einem Innengewinde (14) zur Aufnahme eines Außengewindes (16) einer Gewindespindel (15) umfassen, wobei die Fußrohre (12) jeweils in einem Mantelrohr (17) geführt sind, wobei die Mantelrohre (17) vorzugsweise jeweils mit den jeweiligen Aufnahmehülsen (20) verbunden sind, welche Aufnahmehülsen (20) vorzugsweise die Aufnahmeteile (5) tragen.

9. Stützvorrichtung nach einem der vorhergehenden Ansprüche, **dadurch gekennzeichnet, dass** die Fußteile (3', 3") an einem unteren Ende jeweils eine verschwenkbare Fußplatte und/oder einen verschwenkbaren Fußteller (24) aufweisen.

10. Stützvorrichtung nach einem der vorhergehenden Ansprüche, **dadurch gekennzeichnet, dass** sie im Wesentlichen aus Metall, insbesondere Aluminium, Edelstahl, eloxiertem Eisen oder pulverbeschichtetem Eisen gefertigt ist.

11. Stützvorrichtung nach einem der Ansprüche 1 sowie 3 bis 10, **dadurch gekennzeichnet, dass** die beiden Abstützelemente (2a, 2b) über ein mit den Fußteilen (3, 3', 3") der beiden Abstützelemente vorzugsweise unlösbar verbundenes langgestrecktes Verbindungselement, insbesondere über eine Verbindungstraverse, verbunden sind.

12. Stützvorrichtung nach einem der Ansprüche 2 bis 10, **dadurch gekennzeichnet, dass** die Aufnahmehülsen (20) der beiden Abstützelemente (2a, 2b) jeweils mit einem quer zu ihren Längsachsen angeordneten, länglich ausgebildeten Kopplungselement, insbesondere mit einem Vierkantrohr (34) verbunden sind, wobei die Vierkantrohre (34) jeweils insbesondere über ein in das jeweilige Vierkantrohr (34) eingeschobenes L-Stück (35) direkt oder über eine Quertraverse (37, 38) mit einem Aufnahmeteil (5) verbunden sind, wobei die beiden Kopplungselemente (34) vorzugsweise mit einem Trittbrett, insbesondere Riffelblech (40) verbunden, beispielsweise unlösbar verbunden, insbesondere vernietet, oder lösbar verbunden, insbesondere mittels Schrauben oder Bolzen verbunden sind.

13. Kit, umfassend eine an einem Fahrzeug gelagerte, ein- und ausklappbare Trittstufe (29) sowie eine Stützvorrichtung (1, 1', 1", 1‴) nach einem der Ansprüche 1 bis 12.

## Claims

1. A supporting device (1, 1', 1", 1‴) for supporting a step (29) of a recreational vehicle or a travel trailer, comprising a first supporting element (2a) for supporting a first lateral end portion (30a) of the step (29) and a second supporting element (2b) for supporting a second lateral end portion (30b) of the step (29), each of the two supporting elements (2a, 2b) having a leg part (3, 3', 3") for placing the supporting element (2a, 2b) on a ground (4) and a receiving part (5) for receiving the corresponding lateral end portion (30a, 30b) of the step (29), the receiving parts (5) each having at least a supporting plate (6) for placing the end portions (30a, 30b) of the step (29) thereon, and the receiving parts (5) of the two supporting elements (2a, 2b) being coupled with the respective leg parts (3, 3', 3") of the two supporting elements (2a, 2b) in a height-adjustable manner, the two supporting elements (2a, 2b) being connectable to each other via a connecting bar (21), **characterized in that** the supporting elements (2a, 2b) each have an oblong receiving sleeve (20) for receiving the two end portions of the connecting bar (21), the connecting bar (21) being configured to be secured at different points in the receiving sleeve (20) by means of fastening elements.

2. The supporting device according to claim 1, **characterized in that** the fastening elements are fastening screws.

3. The supporting device according to claim 2, **characterized in that** the receiving sleeves (20) are connected, preferably welded, to the respective leg parts (3, 3', 3"), the longitudinal axes of the leg parts (3, 3', 3") each forming a right angle with the longitudinal axes of the receiving sleeves (20).

4. The supporting device according to any one of claims 2 or 3, **characterized in that** the supporting plates (6) of the receiving parts (5) are connected, in particular welded, to the respective receiving sleeves (20), the longitudinal axes of the supporting plates (6) being preferably perpendicular to the longitudinal axes of the receiving sleeves (20).

5. The supporting device according to any one of the preceding claims, **characterized in that** the receiving parts (5) are formed by section rails, in particular U-sections, which preferably have an end plate (9) at one end, the respective free longitudinal edges (11) of the U-sections of the two supporting elements (2a, 2b) preferably facing each other when in use.

6. The supporting device according to any one of the preceding claims, **characterized in that** the two leg parts (3, 3', 3") of the two supporting elements (2a, 2b) are variably height-adjustable and preferably each have a threaded spindle (15), which has a male thread (16), and a corresponding mating thread (14, 27), the threads (16, 14, 27) preferably being trapezoidal threads.

7. The supporting device according to claim 6, **characterized in that** the receiving parts (5) of the two supporting elements (2a, 2b) are coupled with the leg parts (3, 3', 3") in such a manner that operation of the threaded spindles (15) effects a height adjustment of the receiving parts (5).

8. The supporting device according to any one of the preceding claims, in particular according to claim 2, **characterized in that** the leg parts (3) each comprise a leg tube (12) having a female thread (14) for receiving a male thread (16) of a threaded spindle (15), the leg tubes (12) each being guided in a jacket tube (17), the jacket tubes (17) each being preferably connected to the respective receiving sleeves (20), said receiving sleeves (20) preferably supporting the receiving parts (5).

9. The supporting device according to any one of the preceding claims, **characterized in that** the leg parts (3', 3") each have a pivoting leg plate and/or a pivoting leg disk (24) at a bottom end.

10. The supporting device according to any one of the preceding claims, **characterized in that** the supporting device is made essentially of metal, in particular aluminum, stainless steel, anodized iron, or powder-coated iron.

11. The supporting device according to any one of claims 1 and 3 to 10, **characterized in that** the two supporting elements (2a, 2b) are connected via an elongated connecting element, in particular a connecting crossmember, which is connected, preferably irreversibly, to the leg parts (3, 3', 3") of the two supporting elements.

12. The supporting device according to any one of claims 2 to 10, **characterized in that** the receiving sleeves (20) of the two supporting elements (2a, 2b) are connected to respective oblong coupling elements, in particular square tubes (34), which are disposed perpendicular to their longitudinal axes, the square tubes (34) each being connected, in particular via an L-piece (35) inserted into each square tube (34), to one of the receiving parts (5) directly or via a transverse crossmember (37, 38), the two coupling elements (34) preferably being connected to a tread, in particular a tread plate (40), for example connected irreversibly, in particular riveted, or connected reversibly, in particular by means of screws or bolts.

13. A kit comprising a folding step (29) mounted on a vehicle and a supporting device (1, 1', 1", 1‴) according to any one of claims 1 to 12.

## Revendications

1. Dispositif de support (1, 1', 1", 1‴) destiné à appuyer un marchepied (29) d'un camping-car ou d'une caravane, comprenant un premier élément d'appui (2a) destiné à appuyer une première partie d'extrémité (30a) latérale du marchepied (29) et un deuxième élément d'appui (2b) destiné à appuyer une deuxième partie d'extrémité (30b) latérale du marchepied (29), chacun des deux éléments d'appui (2a, 2b) comportant une pièce de pied (3, 3', 3") destinée à poser l'élément d'appui (2a, 2b) sur un sol (4) et une pièce de réception (5) destinée à recevoir la partie d'extrémité latérale (30a, 30b) correspondante du marchepied (29), les pièces de réception (5) comportant chacune au moins une plaque d'appui (6) destinée à appuyer les parties d'extrémité (30a, 30b) du marchepied (29) et les pièces de réception (5) des deux éléments d'appui (2a, 2b) étant couplées de manière réglable en hauteur aux pièces de pied (3, 3', 3") respectives des deux éléments d'appui (2a, 2b), les deux éléments d'appui (2a, 2b) pouvant être reliés par une tige de liaison (21), **caractérisé en ce que** les éléments d'appui (2a, 2b) comportent chacun un manchon de réception (20) oblong destiné à recevoir les deux parties d'extrémité de la tige de liaison (21), la tige de liaison (21) pouvant être fixée à différents endroits dans le manchon de réception (20) à l'aide de moyens de fixation.

2. Dispositif de support selon la revendication 1, **caractérisé en ce que** les moyens de fixation sont des vis de fixation.

3. Dispositif de support selon la revendication 2, **caractérisé en ce que** les manchons de réception (20) sont reliées, de préférence soudées, aux pièces de pied (3, 3', 3") respectives, les axes longitudinaux des pièces de pied (3, 3', 3") formant chacun un angle droit avec les axes longitudinaux des manchons de réception (20).

4. Dispositif de support selon l'une des revendications 2 ou 3, **caractérisé en ce que** les plaques d'appui (6) des pièces de réception (5) sont reliées, notamment soudés, aux manchons de réception (20) respectifs, les axes longitudinaux des plaques d'appui (6) étant de préférence perpendiculaire par rapport aux axes longitudinaux des manchons de réception (20).

5. Dispositif de support selon l'une quelconque des revendications précédentes, **caractérisé en ce que** les pièces de réception (5) sont constituées de rails profilés, notamment de profilés en U, qui comportent de préférence une plaque d'extrémité (9) à une extrémité, les bords longitudinaux libres (11) respectifs des profilés en U des deux éléments d'appui (2a, 2b) étant de préférence tournés l'un vers l'autre en situation d'utilisation.

6. Dispositif de support selon l'une quelconque des revendications précédentes, **caractérisé en ce que** les deux pièces de pied (3, 3', 3") des deux éléments d'appui (2a, 2b) sont réglables en hauteur en continu et comportent de préférence chacun une tige filetée (15), qui présente un filetage mâle (16), et un contre-filetage (14, 27) correspondant, les filetages (16, 14, 27) étant de préférence des filetages trapézoïdaux.

7. Dispositif de support selon la revendication 6, **caractérisé en ce que** les pièces de réception (5) des deux éléments d'appui (2a, 2b) sont couplées aux pièces de pied (3, 3', 3") de telle sorte qu'un actionnement des tiges filetées (15) entraîne un réglage en hauteur des pièces de réception (5).

8. Dispositif de support selon l'une quelconque des revendications précédentes, notamment selon la revendication 2, **caractérisé en ce que** les pièces de pied (3) comprennent chacune un tube de pied (12) présentant un filetage femelle (14) destiné à recevoir un filetage mâle (16) d'une tige filetée (15), les tubes de pied (12) étant guidés chacun dans un tube enveloppe (17), les tubes enveloppes (17) étant de préférence reliés chacun aux manchons de réception (20) respectifs, lesdits manchons de réception (20) supportant de préférence les pièces de réception (5).

9. Dispositif de support selon l'une quelconque des revendications précédentes, **caractérisé en ce que** les pièces de pied (3', 3") comportent chacune une plaque de pied pivotante et/ou un plateau de pied (24) pivotant à une extrémité inférieure.

10. Dispositif de support selon l'une quelconque des revendications précédentes, **caractérisé en ce que** le dispositif de support est essentiellement fabriqué en métal, notamment en aluminium, en acier inoxydable, en fer anodisé ou en fer thermolaqué.

11. Dispositif de support selon l'une quelconque des revendications 1 et 3 à 10, **caractérisé en ce que** les deux éléments d'appui (2a, 2b) sont reliés par un élément de liaison allongé, notamment par une traverse de liaison, qui est relié, de préférence de manière indétachable, aux pièces de pied (3, 3', 3") des deux éléments d'appui.

12. Dispositif de support selon l'une quelconque des revendications 2 à 10, **caractérisé en ce que** les manchons de réception (20) des deux éléments d'appui (2a, 2b) sont reliés à des éléments d'accouplement oblongs respectifs, notamment à des tubes carrés (34), qui sont perpendiculaires à leurs axes longitudinaux, les tubes carrés (34) étant reliés chacun, notamment au moyen d'une pièce en L (35) insérée dans le tube carré (34) correspondant, à une pièce de réception (5) de manière directe ou par l'intermédiaire d'une traverse perpendiculaire (37, 38), les deux éléments d'accouplement (34) étant de préférence reliés - par exemple de manière indétachable, notamment par rivetage, ou de manière amovible, notamment au moyen de vis ou de boulons - à une marche, notamment une tôle striée (40).

13. Kit comprenant un marchepied (29) pliant monté sur un véhicule et un dispositif de support (1, 1', 1", 1‴) selon l'une quelconque des revendications 1 à 12.
